# EUROPEAN PATENT APPLICATION

(11) **EP 4 703 859 A1**
(43) Date of publication of application: **04.03.2026**
(21) Application number: 25165840.7
(22) Date of filing: 25.03.2025
(51) Int. Cl.: G06F 3/04847

(54) **AUTOMOTIVE DISPLAY CONTROL DEVICE**

(30) Priority: 02.09.2024 KR 20240118434
(71) Applicant: Hyundai Mobis Co., Ltd., Gangnam-gu Seoul 06141 (KR)
(72) Inventor: PECK, Soo Jin, 16891 Yongin-si, Gyeonggi-do (KR); KIM, Shin Yeong, 16891 Yongin-si, Gyeonggi-do (KR); KIM, Jae Min, 16891 Yongin-si, Gyeonggi-do (KR); KIM, Tae Hun, 16891 Yongin-si, Gyeonggi-do (KR); KIM, Seung Jae, 16891 Yongin-si, Gyeonggi-do (KR); KIM, Kyung Hoon, 16891 Yongin-si, Gyeonggi-do (KR); CHOI, Myung Bin, 16891 Yongin-si, Gyeonggi-do (KR)
(74) Representative: Jung, Minkyu

(57) **Abstract**

An automotive display control device according to one embodiment includes a display configured to recognize a touch of a user and including a first area and a second area, and a transparent knob which is attached to the second area of the display and recognizes a touch of the user, wherein a function currently being controlled is displayed in the first area and a plurality of manipulation boxes corresponding to the function are displayed in the second area, and when the user touches the transparent knob or the second area, one of the plurality of manipulation boxes is activated and the function is controlled with information given to the activated manipulation box.

## Description

### CROSS-REFERENCE TO RELATED APPLICATIONS

This application claims priority to and the benefit of Korean Patent Application No. 10-2024-0118434, filed on September 2, 2024, the disclosure of which is incorporated herein by reference in its entirety.

### TECHNICAL FIELD

The present invention relates to an automotive display control device and a method of manipulating the same, and more particularly, to an automotive display control device which can control various functions and be easily manipulated.

### BACKGROUND

Recently, vehicles are provided with display devices to enable various functions of the vehicles to be manipulated. However, simple application of functions of a vehicle to the vehicle through a display may cause a driver to be careless, and hence the display may be manipulated through a separate knob.

A virtual knob displayed on the display may be applied as the knob, but this has a demerit that it is difficult for a driver or passenger to manipulate the virtual knob in a moving vehicle. This is because the driver or passenger in the vehicle needs to ensure stability of vehicle driving by reducing the time the driver or passenger needs to look at the display. It may not be easy to determine which function among various functions displayed on the display the knob is linked in a situation in which a user does not concentrate his/her attention on the display. Therefore, a knob formed to have the structure of a knob that is easily manipulated is required.

### SUMMARY

One embodiment of the present invention is directed to an automative display control device which can control various functions and be easily manipulated.

The technical problems of the present specification are not limited to the above-mentioned technical problems, and other technical problems which are not mentioned will be clearly understood by those skilled in the art from the following description.

According to an aspect of the present invention, there is provided an automotive display control device including: a display configured to recognize a touch of a user and including a first area and a second area; and a transparent knob attached to the second area of the display, the transparent knob recognizing a touch of the user.

A function being controlled may be displayed in the first area, and a plurality of manipulation boxes corresponding to the function may be displayed in the second area, and when the user touches the transparent knob or the second area, one of the plurality of manipulation boxes may be activated, and the function may be controlled with information given to the activated manipulation box.

The plurality of manipulation boxes may be displayed on an outer portion of the transparent knob, and when the user touches the manipulation box and then drags the manipulation box to the inside of the transparent knob, the manipulation box may be activated and be moved to the inside of the transparent knob, corresponding to the dragging of the user, and the function may be manipulated with information given to the activated manipulation box.

When the activated manipulation box at least partially overlaps the transparent knob, a display of an outer side or inner side of the transparent knob may be changed.

According to another aspect of the present invention, there is provided an automotive display control device including: a display configured to recognize a touch of a user and include a first area and a second area; and a transparent knob attached to the second area of the display, the transparent knob recognizing a touch of the user, wherein a function being controlled is displayed in the first area, and a plurality of manipulation boxes corresponding to the function are displayed in the second area, wherein, when the user touches the transparent knob or the second area, one of the plurality of manipulation boxes is activated, and the function is controlled with information given to the activated manipulation box, and wherein the transparent knob includes a central portion and a peripheral portion surrounding the central portion.

An edge of each of the central portion and the peripheral portion may be formed to protrude such that a fingertip of the user settles on the peripheral portion.

A cursor may be displayed on a portion of the edge of the transparent knob corresponding to a position at which the user touches the peripheral portion when the user touches the peripheral portion, and the cursor may be linked to movement of the position at which the user touches the peripheral portion to be moved along the outer portion of the transparent knob.

The peripheral portion may be divided into a plurality of areas, the areas may correspond to the plurality of manipulation boxes, and the manipulation box corresponding to an area touched by the user may be activated.

At a moment when the user pulls the fingertip out of the peripheral portion, the manipulation box corresponding to an area of the peripheral portion that the user touched last may be activated, and the function may be controlled with information given to the activated manipulation box.

The plurality of areas into which the peripheral portion may be divided are partitioned by a virtual line, and a display of each manipulation box may be changed to a first display or a second display.

The manipulation box corresponding to an area in which the cursor may be located is displayed with the second display and the other manipulation boxes may be displayed with the first display. When the cursor is moved to be located in an adjacent area while passing through the virtual line, a display of the manipulation box corresponding to the adjacent area may be changed to the second display.

The manipulation box may extend to overlap an area on which the cursor is displayed, and be displayed in the form of a gauge on which gradations are displayed, and information for manipulating the functions may be given to the gradations.

At a moment when the user pulls the fingertip out of the peripheral portion, the function may be controlled with information given to the gradation overlapping the cursor.

In a case where the function is controlled with information given to the manipulation box, the information may be displayed on the inner side of the transparent knob.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a view illustrating an automotive display control device according to one embodiment of the present invention;
FIG. 2 is a view illustrating a transparent knob according to one embodiment of the present invention;
FIG. 3 is a view illustrating a state in which the automotive display control device operates according to one embodiment of the present invention;
FIG. 4 is a view illustrating a state in which an automotive display control device operates according to another embodiment of the present invention;
FIG. 5 is a view illustrating a state in which a cursor displayed on a transparent knob and a manipulation box operate according to another embodiment of the present invention;
FIG. 6 is a view illustrating a state in which a manipulation box is activated according to another embodiment of the present invention; and
FIG. 7 is a view illustrating a state in which gradations are displayed in an outer portion of a transparent knob according to another embodiment of the present invention.

### DETAILED DESCRIPTION

Various changes may be applied to the present invention, and therefore only particular examples are illustrated in detail. However, this is not intended limit the present invention to the certain form, and the present invention should be understood to include all changes and equivalent materials and replacements. In the following description, detailed explanation of known related functions and constitutions may be omitted to avoid unnecessarily obscuring the subject manner of the present invention.

It will be understood that, although the terms "first," "second," etc. may be used herein to describe various elements, these elements should not be limited by these terms. These terms are only used to distinguish one element from another element.

The technical terms used herein are used only for the purpose of illustrating a specific embodiment and not intended to limit the embodiment. As used herein, the singular forms are intended to include the plural forms as well, unless the context clearly indicates otherwise. It will be further understood that the terms "includes" and/or "including," when used in this specification, specify the presence of stated features, integers, steps, operations, elements, and/or components, but do not preclude the presence and/or addition of one or more other features, integers, steps, operations, elements, components, and/or groups thereof.

Throughout the specification, "connected" does not mean only that two or more constituent elements are directly connected, but may also mean that two or more constituent elements are indirectly connected through another constituent element, or physically connected or electrically connected, and it may include a case where substantially integral parts are connected to each other although they are referred to by different names according to positions or functions.

A component is described as being formed or arranged "on (above)" or "below (under)" another component means not only that the two components are directly in contact, but may also mean that one or more other components are formed or arranged between the two components. In addition, the expression "on (above)" or "below (under)" may include not only an upward direction but also a downward direction with respect to one component.

Hereinafter, an embodiment of an automotive display control device will be described in detail with reference to the accompanying drawings. In description with reference to the accompanying drawings, the same reference numerals will be assigned to the same or corresponding element, and repetitive description thereof will be omitted.

In a conventional vehicle, knobs or buttons for controlling each function of the vehicle were arranged as separate articles. As an example, buttons and knobs for manipulating media in the vehicle and buttons and knobs for manipulating an air conditioner in the vehicle existed separately. However, as functions provided by vehicles diversify, knobs and buttons that can control multiple functions by integrating such knobs and buttons are required. The present invention is directed to an automotive display control device which enables multiple functions to be performed using a single knob through a display and a transparent knob attached thereto.

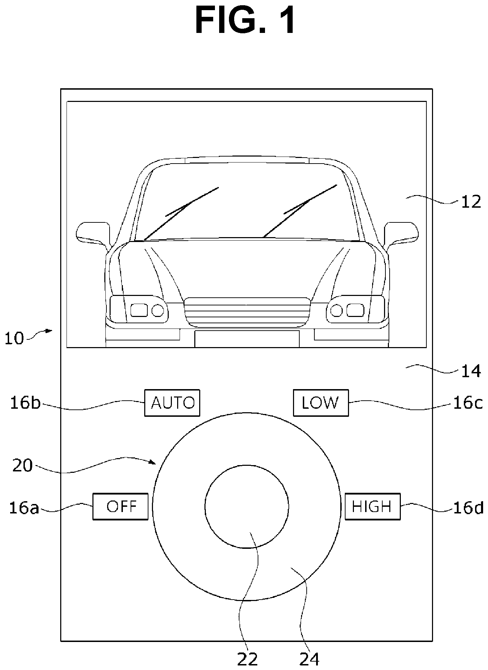

FIG. 1 is a view illustrating an automotive display control device according to one embodiment of the present invention.

Referring to FIG. 1, the automotive display control device according to one embodiment of the present invention may include a display 10 and a transparent knob 20 attached to the display 10.

The display 10 may recognize a touch of a user. The display 10 may include a first area 12 and a second area 14. The display 10 may include three or more areas. The first area 12 may be an area in which functions being controlled are displayed as shown in FIG. 1. The second area 14 may be an area in which the transparent knob 20 is located. A plurality of manipulation boxes 16 corresponding to the functions being controlled may be displayed in the second area 14.

In FIG. 1, a state in which a function of controlling a moving speed of wipers is implemented is illustrated as an example. The shape of a vehicle and wipers may be displayed in the first area 12 such that the user can recognize a moving speed of the wipers of the vehicle.

The manipulation boxes 16 on which information on a speed of the wipers is displayed to control the speed of the wipers may be displayed in the second area 14. The information displayed on the manipulation boxes 16 may be as follows: "OFF" indicating information that an operation of the wipers is stopped, "AUTO" indicating information that an operation speed of the wipers is automatically adjusted, "LOW" indicating information that the wipers operate at a low speed, and "HIGH" indicating information that the wipers operate at a high speed.

The user may activate some of the manipulating boxes 16 by touching the transparent knob 20 or the second area 14. The function being currently controlled may be controlled according to information displayed on the activated manipulation boxes 16.

The above function is merely illustrative, and various functions of the vehicle, such as an air conditioner and media, may be displayed on the display 10.

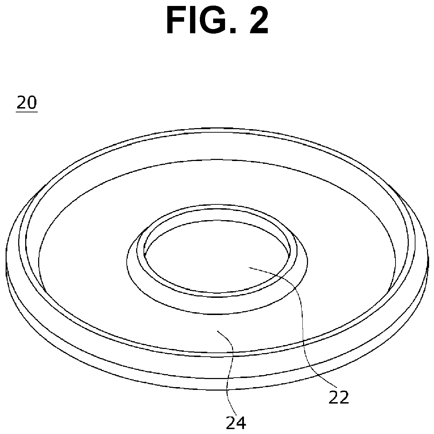

FIG. 2 is a view illustrating a transparent knob according to one embodiment of the present invention.

Referring to FIG. 2, the transparent knob 20 according to one embodiment of the present invention may include a central portion 22 and a peripheral portion 24 surrounding the central portion 22. An edge of each of the central portion 22 and the peripheral portion 24 may be formed to protrude. A fingertip of the user may touch the peripheral portion 24 by settling on the peripheral portion 24.

The driver of the vehicle may have difficulty concentrating while manipulating the automotive display control device. Through a structure of the transparent knob 20, in which at least a portion of the transparent knob 20 protrudes, the user may recognize the structure of the transparent knob 20. Thus, the user can easily manipulate the transparent knob 20.

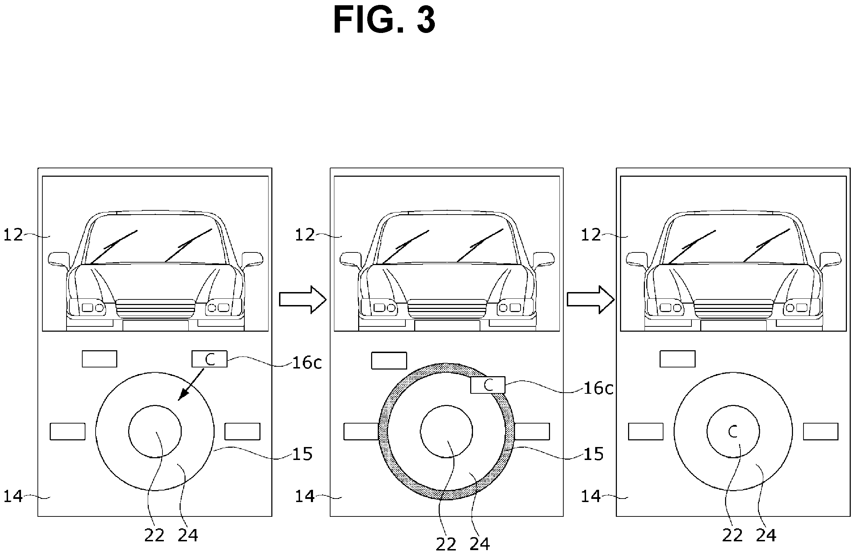

FIG. 3 is a view illustrating a state in which the automotive display control device operates according to one embodiment of the present invention.

Referring to FIG. 3, the user of the automotive display control device according to one embodiment of the present invention may control a function by touching the second area 14. The manipulation box 16 may be displayed in the second area 14. As shown in FIG. 3, a plurality of manipulation boxes 16 may be displayed at an interval on an outer portion of the transparent knob 20.

The user may touch the manipulation box 16 on which desired information is displayed and then drag the manipulation box 16 to the inside of the transparent knob 20, thereby activating the corresponding manipulation box 16. In a case where the corresponding manipulation box 16c is activated, a function currently being controlled may be controlled as information displayed on the activated manipulation box 16.

In a case where the manipulation box 16 is activated, a display of the manipulation box 16 may be changed. In an example, the activated manipulation box 16 may be displayed with a thick edge. In another example, the manipulation box 16 may be displayed in a different color. Accordingly, the user can recognize that the manipulation box 16 has been activated.

In a case where the user drags the manipulation box 16 to the inside of the transparent knob 20, a display of an outer side or inner side of the transparent knob 20 may be changed. In a case where the manipulation box 16 at least partially overlaps the transparent knob 20, the display of the outer side or inner side of the transparent knob 20 may be changed to allow the user to recognize that the corresponding manipulation box 16 has been activated. In an example, in a case where a display of an outer portion 15 of the transparent knob 20 is changed, the outer portion 15 of the transparent knob 20 may be displayed such that a color of the outer portion 15 of the transparent knob 20 is changed.

In a case where the display of the inner side of the transparent knob 20 is changed, a color of the central portion 22 or the peripheral portion 24 of the transparent knob 20 may be changed. For example, information displayed on the activated manipulation box 16 may be displayed on the central portion 22 of the transparent knob 20. Information "C" is displayed on an activated manipulation box 16c as shown in FIG. 3, and hence information "C" may also be displayed on the central portion 22.

In a case where a function displayed on the display 10 is "adjusting speed of the wipers," an operation speed of the wipers may be visually displayed in the first area 12. In a case where the information displayed on the activated manipulation box 16 is "LOW" indicating information that the speed of the wipers is controlled to be slow, the word "LOW" may be displayed on the central portion 22. In addition, a state in which the wipers displayed in the first area 12 move at a slow speed may be displayed.

In this embodiment, the transparent knob 20 may be formed in a form different from the form shown in FIG. 2. In an example, a virtual knob displayed on the display 10 may be the transparent knob 20. The user may control a function by dragging the manipulation box 16 displayed in the second area 14 to the inside of the transparent knob 20 displayed in the second area 14.

Hereinafter, an automative display control device according to another embodiment of the present invention will be described. In the drawings, a portion displayed as a small circle represents a cursor 17, and a portion displayed as a circle formed larger than the cursor 17 represents a touch point 25 of the user.

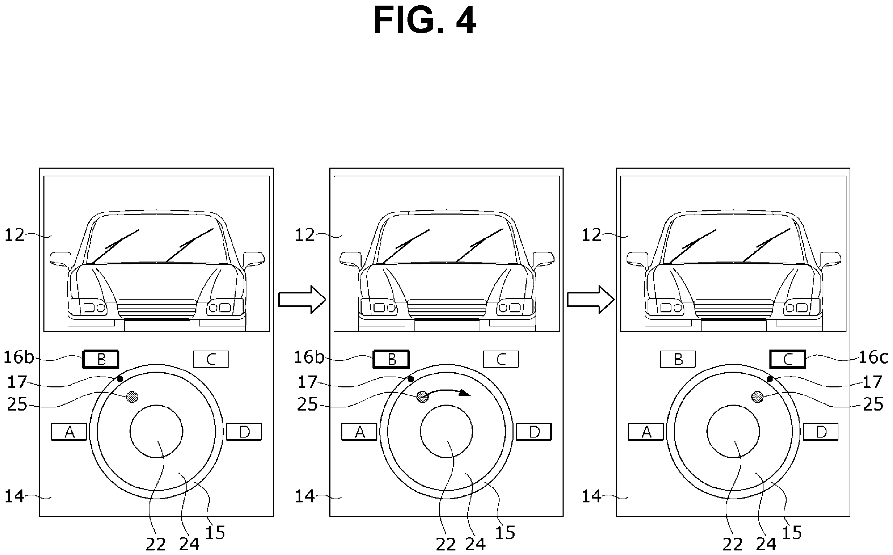

FIG. 4 is a view illustrating a state in which an automotive display control device operates according to another embodiment of the present invention.

Referring to FIG. 4, in the automotive display control device according to another embodiment of the present invention, a cursor 17 may be displayed on an outer portion 15 of a transparent knob 20 in a case where the user touches a peripheral portion 24 of the transparent knob 20.

The cursor 17 may be moved corresponding to a touch of the user. The user may check a position 25 touched through the cursor 17 and a manipulation box 16 corresponding to the position 25. In a case where the user drags the cursor 17 on the peripheral portion 24, the cursor 17 may move on the outer portion 15 of the transparent knob 20, corresponding to the fingertip of the user.

A plurality of manipulation boxes 16 may be displayed at the outer portion 15 of the transparent knob 20, and hence the user may recognize the manipulation box 16 corresponding to a portion at which the cursor 17 is located.

The peripheral portion 24 of the transparent knob 20 may be divided into a plurality of areas. The areas may correspond to the plurality of manipulation boxes 16. Therefore, the manipulation boxes 16 may be displayed on the outer portions of the corresponding areas. When the user touches an area of the peripheral portion 24, the manipulation box 16 corresponding to the area 25 touched by the user may be activated.

A display of the manipulation box 16 may be changed when the manipulation box 16 is activated. Each manipulation box 16 may be changed to a first display or a second display. An activated manipulation box among the plurality of manipulation boxes 16 may be displayed with the second display, and the other manipulation boxes 16 may be displayed with the first display. The first display and the second display represent different displays. In a case where the activated manipulation box 16 is changed, the display of the corresponding manipulation box 16 may be changed to the second display.

In FIG. 4, it can be seen that a manipulation box 16b corresponding to an area in which the cursor 17 is located is displayed with a thick edge. In an example, the second display may be a display with a thick edge. Methods of displaying the first display and the second display are no different, and any displays may be applied as long as the displays can be distinguished from each other as the first display and the second display.

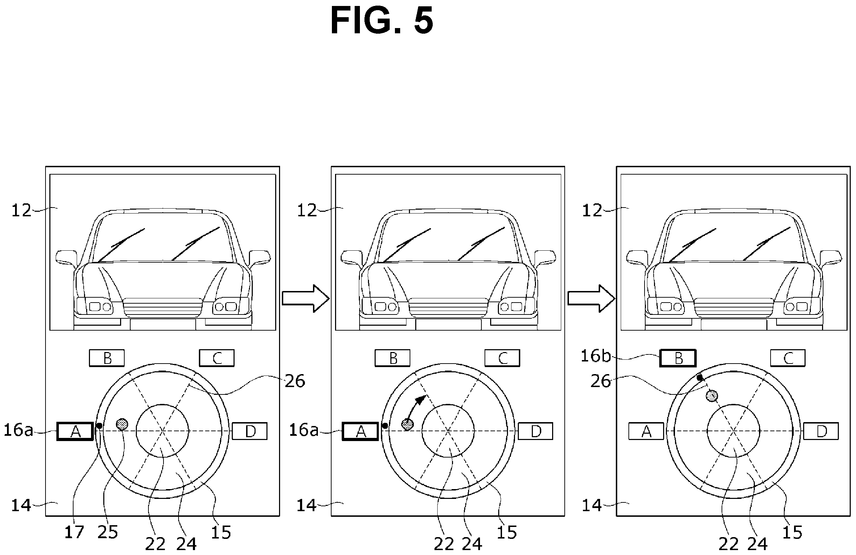

FIG. 5 is a view illustrating a state in which a cursor displayed on a transparent knob and a manipulation box operate according to another embodiment of the present invention.

Referring to FIG. 5, the peripheral portion 24 of the transparent knob 20 according to another embodiment of the present invention may include a plurality of areas partitioned by a virtual line 26. A dotted line shown in FIG. 5 represents the virtual line 26, and the virtual line 26 is not actually displayed on the display 10 and the transparent knob 20. The virtual line 26 may become a standard for partitioning the cursor 17 and the area 25 touched by the fingertip of the user. The manipulation box 16 activated with respect to the virtual line 26 may be changed.

Referring to FIG. 5, the user may initially touch an area in which information "A" is displayed. A manipulation box 16a on which the information "A" is displayed may be activated. A display of the corresponding manipulation box 16a may be changed to a second display. The second display may correspond to the corresponding manipulation box 16a displayed with a thick edge.

After that, the user may drag the cursor 17 along the peripheral portion 24. When the cursor 17 corresponding to the area 25 touched by the fingertip of the user is in contact with the virtual line 26, the activated manipulation box 16 is changed. For example, a manipulation box 16b on which information "B" is displayed may be activated. For example, the user may activate a specific manipulation box 16 by touching an area of the peripheral portion 24, and then activate another manipulation box 16 by dragging the cursor 17.

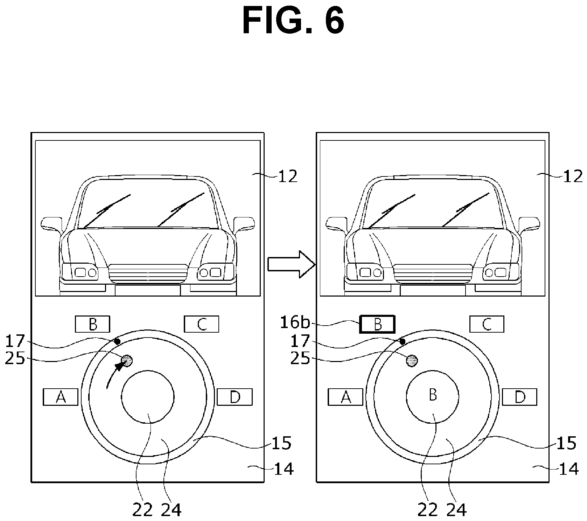

FIG. 6 is a view illustrating a state in which a manipulation box is activated according to another embodiment of the present invention.

Referring to FIG. 6, the user may activate the manipulation box 16b on which information "B" is displayed by dragging the peripheral portion 24, and then pull the fingertip out of the peripheral portion 24. At the same time when the user pulls the fingertip out of the peripheral portion 24, the information "B" may be displayed on the central portion 22, and a function currently being controlled may be controlled to correspond to the information "B."

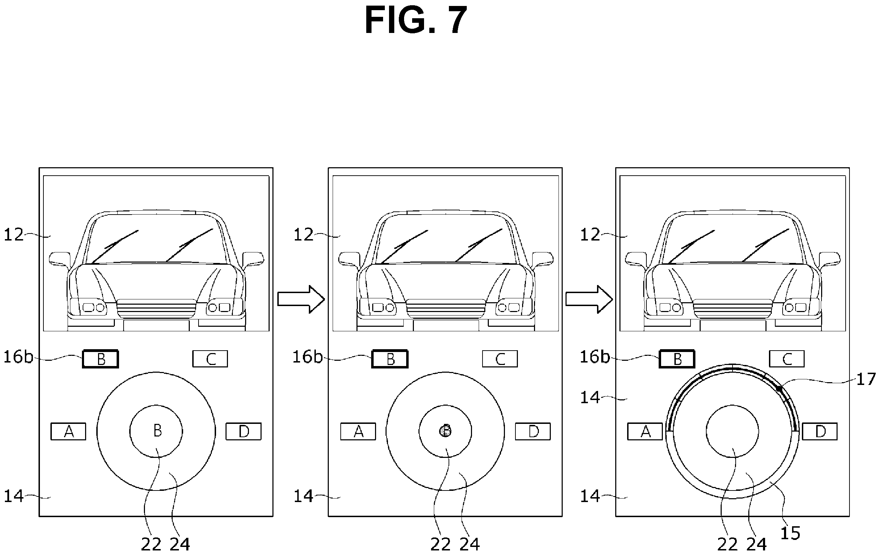

FIG. 7 is a view illustrating a state in which gradations are displayed in an outer portion of a transparent knob according to another embodiment of the present invention.

Referring to FIG. 7, gradations may be displayed on the outer portion 15 of the transparent knob 20 according to another embodiment of the present invention such that a function is linearly controlled.

A first drawing of FIG. 7 is a view illustrating a state in which a specific manipulation box 16b is activated such that a function is controlled with information displayed on the corresponding manipulation box 16b. After that, when the user touches the central portion 22 of the transparent knob 20 as shown in a second drawing of FIG. 7, displays of a second area 14 and the transparent knob 20 may be changed such that detailed manipulation of the corresponding function is possible.

As shown in a third drawing of FIG. 7, a gauge on which gradations are displayed may be displayed on the outer portion 15 of the transparent knob 20. The user may touch the peripheral portion 24 of the transparent knob 20, and the cursor 17 may be displayed to correspond to a position at which the user touches the peripheral portion 24. The user may control a function while moving the cursor 17 on the gauge. Information for manipulating functions may be given at the gradations displayed on the outer portion of the transparent knob 20. The corresponding information may be numerical values.

In an example, the automotive display control device may control an air conditioning mode. The first drawing of FIG. 7 may represent that a cooling mode is implemented. Therefore, information "B" displayed in the first drawing of FIG. 7 may be "Cooling." The corresponding manipulation box 16b may be activated, the air conditioning mode of the vehicle may be implemented as the cooling mode, and cooling in the interior of the vehicle may be performed.

When the user touches the central portion 22 on which "Cooling" is displayed, displays of the second area 14 and the transparent knob 20 may be changed. As shown in the third drawing of FIG. 7, a temperature of discharged air may be controlled. The user may touch the peripheral portion 24, thereby controlling the air conditioner such that the air is discharged to a desired temperature.

Information provided or given at each gradation may correspond to a temperature of the discharged air. The manipulation boxes 16 may be displayed at both a starting portion and an ending portion of the gauge. A minimum value and a maximum value of the temperature of the discharged air may be displayed on the corresponding manipulation boxes 16. In a case where the user selects an air temperature by placing the cursor 17 at a specific gradation, an air temperature value may be displayed on the central portion 22.

In a case where the user controls the temperature of the discharged air by manipulating the transparent knob 20, content displayed in the first area 12 may be changed. In an example, the first area 12 may visually express a state in which the air is discharged from an outlet. As the user controls the temperature of the air, a color of the discharged air displayed in the first area 12 may be changed to display a change in temperature.

The automotive display control devices according to the embodiments of the present invention may provide a haptic response when a specific manipulation box 16 is activated. The haptic response may be implemented through vibrations of the display 10 and the transparent knob 20. In another example, the haptic response may be implemented by providing an effect sound through a speaker. Accordingly, the user can recognize that the manipulation box 16 has been activated.

According to one embodiment of the present invention, a user can control a plurality of functions by touching an area of a display and a transparent knob located in the corresponding area, and intuitively control a function through the transparent knob and a display displayed on the display.

Various beneficial advantages and effects of the present invention are not limited to the above-described contents, and will be more easily understood in the process of describing specific embodiments of the present invention.

Although the present invention has been described in connection with the specific embodiments, it will be understood by those skilled in the art that various modifications and changes can be made thereto without departing from the spirit and scope of the present invention defined by the appended claims.

## Claims

1. An automotive display control device comprising:
a display including a first area and a second area and configured to recognize a touch of a user to the display; and
a transparent knob attached to the second area of the display and configured to recognize a touch of the user,
wherein the display is further configured to display, in the first area, a function currently being controlled, and display, in the second area, a plurality of manipulation boxes corresponding to the function currently being controlled, and
wherein the display is further configured to activate one of the plurality of manipulation boxes when the user touches the transparent knob or the second area, to allow the user to control the function with information provided to the activated manipulation box.

2. The automotive display control device of claim 1, wherein:
the plurality of manipulation boxes is displayed on an outer portion of the transparent knob, and
the display is configured such that, when the user touches the manipulation box and then drags the manipulation box to an inside of the transparent knob, the manipulation box is activated and moved to the inside of the transparent knob, to allow the user to manipulate the function with the information provided to the activated manipulation box.

3. The automotive display control device of claim 2, wherein the display is configured to change a display of an outer side or inner side of the transparent knob when the activated manipulation box at least partially overlaps the transparent knob.

4. The automotive display control device of any one of claims 1 to 3, wherein:
the transparent knob comprises a central portion and a peripheral portion surrounding the central portion,
an edge of each of the central portion and the peripheral portion protrudes such that a fingertip of the user settles on the peripheral portion,
the display is configured to display a cursor on a portion of the edge of the transparent knob corresponding to a position at which the user touches the peripheral portion when the user touches the peripheral portion, and
the cursor is linked to movement of the position at which the user touches the peripheral portion to move along the peripheral portion of the transparent knob.

5. The automotive display control device of claim 4, wherein:
the peripheral portion is divided into a plurality of areas corresponding to the plurality of manipulation boxes, and
the display is configured to activate one of the plurality of manipulation boxes corresponding to an area touched by the user.

6. The automotive display control device of claim 4 or 5, wherein the display is configured to activate the manipulation box corresponding to an area of the peripheral portion that the user touched last when the user pulls the fingertip out of the peripheral portion, and control the function with information provided to the activated manipulation box.

7. The automotive display control device of claim 5 or 6, wherein:
the plurality of areas into which the peripheral portion is divided is partitioned by a virtual line,
the display is configured to:
change a display of each manipulation box to a first display or a second display;
display, on the second display, the manipulation box corresponding to an area in which the cursor is located; and
display, on the first display, other manipulation boxes, and
when the cursor is moved to an adjacent area while passing through the virtual line, the display is configured to change, to the second display, a display of the manipulation box corresponding to the adjacent area.

8. The automotive display control device of any one of claims 4 to 7, wherein the manipulation box extends to overlap an area on which the cursor is displayed, and is displayed in a form of a gauge on which gradations are displayed, and information for manipulating the functions is provided to the gradations.

9. The automotive display control device of claim 8, wherein the display is configured to allow the user to control the function with information provided to the gradation overlapping the cursor when the user pulls the fingertip out of the peripheral portion.

10. The automotive display control device of any one of claims 3 to 9, wherein the display is configured to display the information on the inner side of the transparent knob when the user controls the function with the information provided to the activated manipulation box.
